# EUROPÄISCHE PATENTSCHRIFT

(11) **EP 1 749 678 B1**
(45) Veröffentlichungstag und Bekanntmachung des Hinweises auf die Patenterteilung: **30.09.2009**
(21) Anmeldenummer: 06016427.4
(22) Anmeldetag: 07.08.2006
(51) Int. Cl.: B60B 35/02

(54) **Achskörper für Nutzfahrzeugachsen**
Axle body for industrial vehicle axles
Corps d'essieu pour axes des véhicules utilitaires

(30) Priorität: 06.08.2005 DE 102005037211
(43) Veröffentlichungstag der Anmeldung: 07.02.2007
(73) Patentinhaber: MAN Nutzfahrzeuge Aktiengesellschaft, 80976 München (DE)
(72) Erfinder: Landsherr, Thomas, Dipl.-Ing., 80995 München (DE)

(56) Entgegenhaltungen:
- EP-A2- 0 940 319
- DE-A1- 3 519 201
- DE-A1- 10 055 859
- US-A- 4 787 680

## Beschreibung

Die vorliegende Erfindung betrifft einen Achskörper für Nutzfahrzeugachsen, insbesonder für nicht angetriebene Nutzfahrzeugachsen, gemäß Oberbegriff des unabhängigen Patentanspruchs 1.

Für nicht angetriebene Achsen (Vorderachsen, Vorlauf-, Nachlaufachsen, Trailerachsen, etc.) von Nutzfahrzeugen werden meist Starrachsen eingesetzt. Diese weisen üblicherweise einen durchgängigen Achskörper in Form eines profilierten Trägers mit Aufhängungsteilen für die Räder auf. Der Achskörper kann über Blattfedern, Schraubenfedern, Luftbälge oder andere geeignete Feder- und/oder Dämpfungseinrichtungen gegen den Fahrgestellrahmen des Nutzfahrzeugs abgestützt sein. Die notwendige Dimensionierung des Achskörpers richtet sich sowohl nach den typischerweise auftretenden Belastungen im Fahrbetrieb sowie insbesondere nach den in extremen Fahr-bzw. Bremssituationen auftretenden Maximalbelastungen.

Eine seit längerem vielfach verwendete Variante von Vorderachskörpern für nicht angetriebene Vorderachsen von Nutzfahrzeugen weist ein sog. Doppel-T-Profil ausreichenden Querschnitts auf, um die auftretenden Belastungen zuverlässig aufnehmen zu können. Diese Vorderachskörper weisen ein erhebliches Gewicht auf, da sie im Hinblick auf die auftretenden Belastungen mit ausreichenden Sicherheitsreserven konstruiert und dimensioniert sein müssen.

Aus der gattungsgemäßen DE 100 55 859 A1 ist eine Achskonstruktion für nicht angetriebene Fahrzeugachsen bekannt. Dabei sind beidseitig der Fahrzeugmittelebene angeordnete, schwenkbar an dem Fahrzeugchassis angelenkte und mittels Federelemente gegen das Fahrzeugchassis abgestützte Achslenker vorgesehen. Ein die beiden Achslenker starr miteinander verbindender, durchgehender Achskörper ist zur Lagerung der Räder an den beiden Enden mit Achsschenkeln versehen. Die beiden Achslenker sind als Schmiedeteil ausgeführt und zeichnen sich durch eine gewisse eigene Elastizität aus, welche durch eine Gestaltung der Materialquerschnitte der Achslenker erzielt wird.

Ein Ziel der vorliegenden Erfindung besteht darin, einen Achskörper für ein Nutzfahrzeug zur Verfügung zu stellen, der den auftretenden Belastungen zuverlässig standhalten kann und dabei möglichst kostengünstig und gewichtsoptimierend konstruiert ist.

Dieses Ziel der Erfindung wird mit dem Gegenstand des unabhängigen Anspruchs 1 erreicht. Merkmale vorteilhafter Weiterbildungen der Erfindung ergeben sich aus den abhängigen Ansprüchen.

Ein Achskörper einer Nutzfahrzeugachse, insbesondere für eine nicht angetriebene Vorderachse eines Nutzfahrzeugs mit den Merkmalen des unabhängigen Anspruchs 1 weist im Querschnitt ein Doppel-T-Profil auf, das über seine Längserstreckungsrichtung zumindest teilweise asymmetrisch gestaltet ist, so dass es die im Fahrbetrieb und insbesondere die beim starken Bremsen typischerweise auftretenden maximalen Zug-, Druck- und Torsionsbelastungen besser aufnehmen und dabei gewichtssparend und kostenoptimiert konstruiert ist. Es hat sich in Versuchen herausgestellt, dass der für Vorderachskörper festigkeitskritischste Lastfall das starke Bremsen ist. Beim Bremsen wird der Achskörper mit Torsionslasten beaufschlagt, die zu hohen Spannungen in den gegenüberliegenden Enden des Doppel-T-Profils führen.

Während bekannte Nutzfahrzeugvorderachsen mit nicht angetriebenen Vorderrädern zwischen den Achsaufhängungen meist entweder ein im Querschnitt geschlossenes und Hohlrohrprofil oder ein offenes Doppel-T-Profil aufweisen, die im Querschnitt jeweils symmetrisch sind, ist der Gegenstand der vorliegenden Erfindung ein asymmetrischer Achskörper, der im Bereich der auftretenden hohen Spannungsbelastungen massiver oder verstärkter ausgeführt ist als im restlichen Querschnitt. Dadurch, dass der Achskörper bei gleicher Belastbarkeit insgesamt leichter ausgeführt werden kann, lässt sich eine Gewichts- und Kostenreduzierung erreichen.

Es soll an dieser Stelle erwähnt sein, dass die Erfindung nicht nur bei dem erwähnten Achskörper mit Doppel-T-Profil realisierbar ist, sondern ebenso bei einem Achskörper, der ein Hohlprofil aufweist. Auch dieses kann entsprechend der auftretenden Belastungsfälle in der beschriebenen Weise asymmetrisch gestaltet sein.

Um das Ziel der Erfindung zu erreichen, kann es je nach Anwendungsfall ausreichen, gezielt einzelne Bereiche des Querschnitts entsprechend der im Fahrbetrieb auftretenden Belastungen zu verstärken bzw. massiver auszuführen. Diese Bauteilbelastungen werden oftmals mit einer sog. Finite-Elemente-Methode-Berechnung (FEM-Berechnung) ermittelt, so dass die Bauteildimensionierungen sehr präzise an die typischen Belastungsfälle angepasst werden können. Bei einem Hohlrohrprofil können variable Wandstärken gewählt oder zusätzliche Verstärkungsstege am Außenumfang des Hohlrohrs angebracht werden. Bei Verwendung eines Doppel-T-Profils ist es dagegen sinnvoll, zumindest abschnittsweise voluminösere und/oder verstärkte Schenkelabschnitt des Profils entsprechend den im Fahrbetrieb auftretenden Belastungen vorzusehen.

Da beim auftretenden Lastfall der starken Fahrzeugverzögerung durch das eingeleitete Torsionsmoment in Fahrtrichtungen im vorderen unteren Bereich des Querschnitts des Achsprofils sowie im hinteren oberen Bereich die höchsten Materialspannungen auftreten, ist es sinnvoll, diese Bereiche gezielt zu verstärken, insbesondere durch Verwendung größerer Materialstärken und/oder durch zusätzliche Verstärkungsstreifen oder - stege. Unter Umständen kann es bereits ausreichen, nur einen dieser genannten Bereiche gezielt zu verstärken, bspw. den hinteren oberen Bereich des Querschnitts oder den vorderen unteren Bereich. Diese Verstärkungen können sich wahlweise über die gesamte Länge des Achskörpers oder auch nur über einzelne, am meisten belastete Abschnitte erstrecken.

Während sich bei einem flach liegend angeordneten Doppel-T-Profil die entsprechenden parallelen Schenkel, die durch einen senkrechten Mittelsteg verbunden sind, verstärken lassen, können bei einem Hohlrohrprofil die entsprechenden Wandbereiche dicker ausgeführt oder an den benötigten Stellen zusätzliche Verstärkungsstreifen oder -stege o. dgl. angebracht sein.

Der Achskörper kann wahlweise aus Stahl oder Leichtmetall oder auch aus einem Verbundmaterial bestehen. Bei Verwendung eines erfindungsgemäßen asymmetrischen Doppel-T-Profils aus Stahl oder Leichtmetall kann der gewünschte asymmetrische Querschnitt vorzugsweise bereits beim Zieh- und/oder Schmiedevorgang hergestellt werden. Bei den im Fahrzeugbau zunehmend verwendeten Faserverbundbauteilen, bspw. aus GFK- oder aus CFK-Material, können die gewünschten asymmetrischen Querschnitte bereits bei der Fertigung bzw. Wicklung des Bauteils hergestellt oder nachträglich angebracht werden, bspw. durch Verkleben. Bei einem Hohlprofil können die Verstärkungen ebenfalls wahlweise beim Zieh- oder Gießprozess eingebracht werden.

Der erfindungsgemäße asymmetrische Querschnitt der Achse kann sowohl bei gerade verlaufender Kontur als auch bei einer ein- oder mehrfach gekröpften, gebogenen oder abgewinkelten Kontur der Achse vorgesehen sein.

Wenn im vorliegenden Zusammenhang von Nutzfahrzeugen die Rede ist, so sind damit generell auch Fahrzeuge gemeint, die im herkömmlichen Sprachgebrauch üblicherweise nicht als Nutzfahrzeuge im engeren Sinn bezeichnet werden. Dies können bspw. Fahrzeuge zur Personenbeförderung sein, die eine nicht angetriebene, starre Vorderachse aufweisen. Mit Nutzfahrzeugen im Sinne der vorliegenden Erfindung sind zudem auch Transporter o. dgl. sowie generell alle Fahrzeugtypen umfasst, die starre Vorderachsen mit Vorderachskörpern aufweisen, an denen lenkbare Vorderräder angeordnet sind.

Darüber hinaus kann der erfindungsgemäße Achskörper nicht nur an nicht angetriebenen Vorderachsen zum Einsatz kommen. Der Achskörper ist generell für einen Einsatz bei Trailerachsen, bei Vorlauf- und bei Nachlaufachsen sowie bei nicht gelenkten Vorderachsen geeignet.

Die Erfindung wird nachfolgend anhand eines bevorzugten Ausführungsbeispiels unter Bezugnahme auf die beiliegenden Zeichnungen näher erläutert. Gleiche Teile in den Figuren sind dabei mit gleichen Bezugszeichen versehen, so dass teilweise auf eine mehrfache Erläuterung verzichtet wird.
Fig. 1 zeigt einen Vorderachskörper in Doppel-T-Profii-Ausführung in schematischer Darstellung.
Fig. 2 zeigt einen Querschnitt einer ersten Ausführungsvariante des Vorderachskörpers entlang der Schnittlinie II-II aus Fig. 1.
Fig. 3 zeigt einen Querschnitt einer zweiten Ausführungsvariante des Vorderachskörpers entlang der Schnittlinie II-II aus Fig. 1.
Fig. 4 zeigt eine schematische Perspektivansicht eines Berechnungsmodells des Vorderachskörpers gemäß Fig. 1.

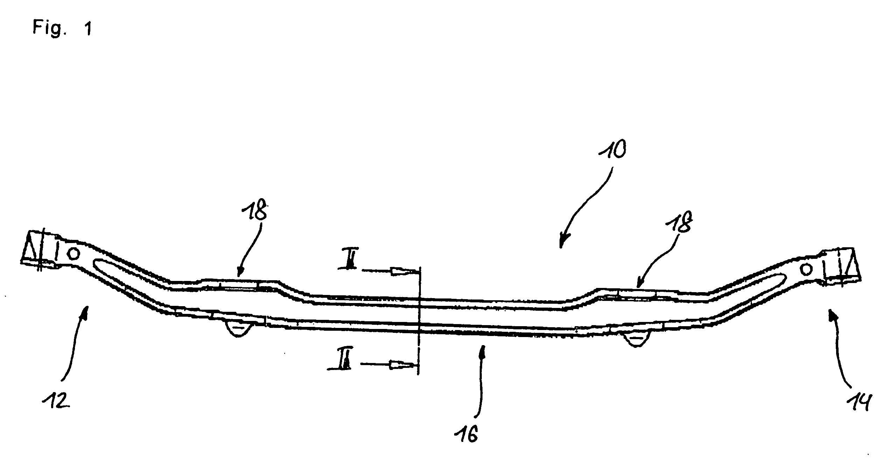

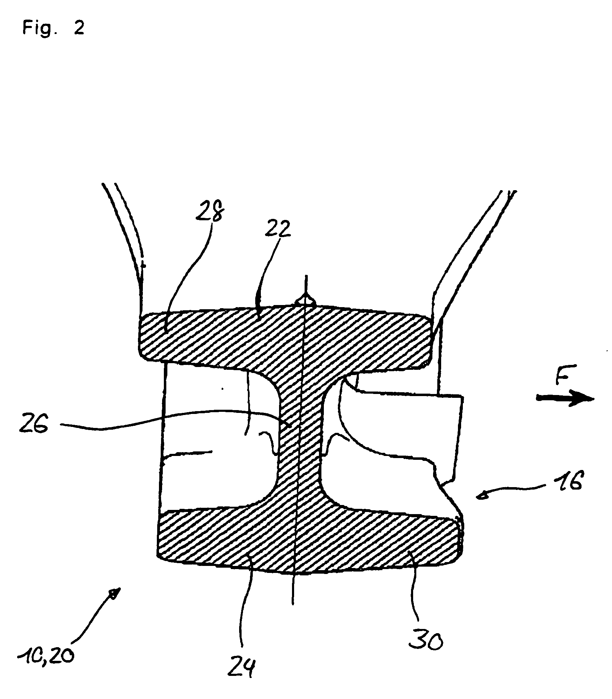

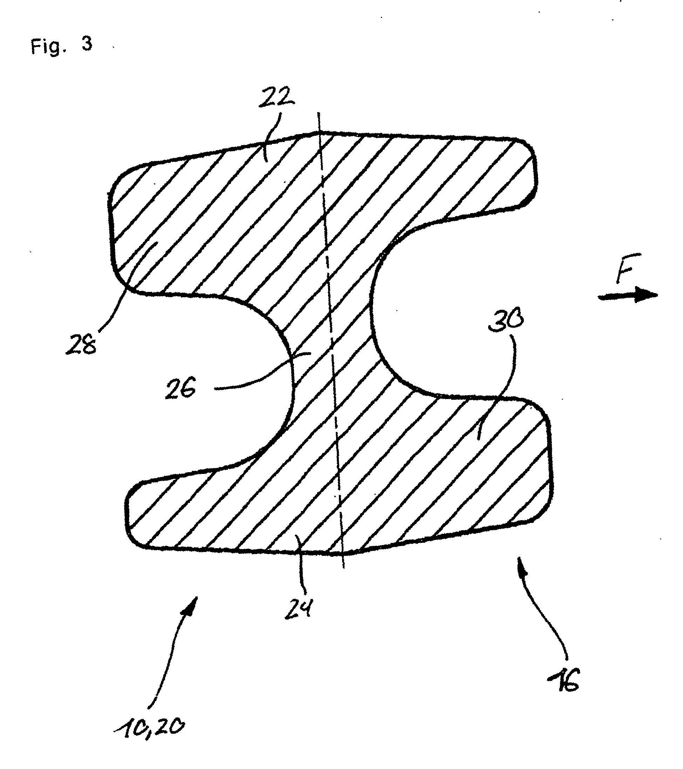

Die schematische Darstellung der Fig. 1 zeigt einen Achskörper 10 einer Nutzfahrzeugvorderachse, der über seine Länge ein Doppel-T-Profil (vgl. Figuren 2 und 3) aufweist und der an seinen beiden Enden 12 und 14 jeweils mit Aufnahmen für lenkbare Aufhängungsteile eines rechten bzw. linken Vorderrades versehen ist. Die beiden Endabschnitte 12 und 14 sind im gezeigten Ausführungsbeispiel gegenüber dem geraden mittleren Abschnitt 16 leicht nach oben abgewinkelt. Diese leichte Kröpfung des Achskörpers 10 zu beiden Seiten kann je nach vorhandenen Einbauverhältnissen und/oder je nach gewünschten Elastizitätseigenschaften des Achskörpers 10 variieren oder auch entfallen. Im Bereich vor dem Übergang vom geraden mittleren Abschnitt 16 zu den nach oben gekröpften seitlichen Endabschnitten 12 und 14 befinden sich jeweils Verbindungsbereiche 18, über welche der Achskörper 10 über geeignete Feder- und/oder Dämpfungselemente (nicht dargestellt) gegen den Nutzfahrzeugrahmen (ebenfalls nicht dargestellt) abgestützt ist.

Im gezeigten Ausführungsbeispiel erstreckt sich die erwähnte Profilierung des Achskörpers 10 (Doppel-T-Profil) annähernd über seine gesamte Länge, variiert jedoch in der Dimensionierung und verjüngt sich leicht in Richtung zu den Endabschnitten 12, 14 hin, in denen sie in einem verjüngten, massiven Abschnitt ausläuft.

Die schematische Schnittdarstellung der Fig. 2 zeigt eine mögliche Variante des Doppel-T-Profils im mittleren Bereich 16 des Vorderachskörpers 10. Dargestellt ist eine Schnittansicht entlang der Schnittlinie II-II der Fig. 1, wobei hier das asymmetrische Profil des Achskörpers 10 erkennbar ist. Die Bereiche des Profils, die einer höheren Maximalbelastung, bspw. beim starken Bremsen des Nutzfahrzeuges unterliegen, sind stärker ausgeführt als die übrigen Bereiche, so dass der Achskörper insgesamt schlanker und gewichtssparenden ausgelegt sein kann und dabei die gleichen Maximalbelastungen aufnehmen kann, die typischerweise im Fahr- und Bremsbetrieb auftreten.

Das Doppel-T-Profil 20 ist entsprechend den auftretenden Lastfällen asymmetrisch gestaltet, wobei die horizontal orientierten oberen und unteren Schenkelabschnitte 22 und 24 jeweils an diagonal gegenüber liegenden Seiten verstärkt sind, wogegen der vertikal orientierte Verbindungsstegabschnitt 26 des Profils 20 unverändert bleiben kann. Die Verstärkungen sind im Ausführungsbeispiel gemäß Fig. 2 jeweils durch verlängerte Schenkelabschnitte 22 und 24 gebildet. Verlängert sind entsprechend Fig. 2 der nach hinten weisende Schenkel 28 des oberen Schenkelabschnittes 22 sowie der nach vorne weisende Schenkel 30 des unteren Schenkelabschnittes 24 des Profils 20.

Die schematische Schnittdarstellung der Fig. 3 zeigt eine weitere mögliche Variante des Doppel-T-Profils im mittleren Bereich 16 des Vorderachskörpers 10. Dargestellt ist wiederum eine Schnittansicht entlang der Schnittlinie II-II der Fig. 1, so dass das asymmetrische Profil des Achskörpers 10 verdeutlicht wird. Die Bereiche des Profils, die einer höheren Maximalbelastung unterliegen, sind wie bei der Variante gemäß Fig. 2 stärker ausgeführt als die übrigen Bereiche, so dass der Achskörper insgesamt schlanker und gewichtssparenden ausgelegt sein kann und dabei die gleichen Maximalbelastungen aufnehmen kann.

Das Doppel-T-Profil 20 ist entsprechend den auftretenden Lastfällen asymmetrisch gestaltet, wobei die horizontal orientierten oberen und unteren Schenkelabschnitte 22 und 24 jeweils an diagonal gegenüber liegenden Seiten jeweils verstärkt sind, wogegen der vertikal orientierte Verbindungsstegabschnitt 26 des Profils 20 unverändert bleiben kann. Die Verstärkungen sind im Ausführungsbeispiel gemäß Fig. 3 jeweils durch verdickte bzw. im Querschnitt erhöhte Schenkelabschnitte 22 und 24 gebildet. Verdickt bzw. erhöht sind entsprechend Fig. 3 der nach hinten weisende Schenkel 28 des oberen Schenkelabschnittes 22 sowie der nach vorne weisende Schenkel 30 des unteren Schenkelabschnittes 24 des Profils 20.

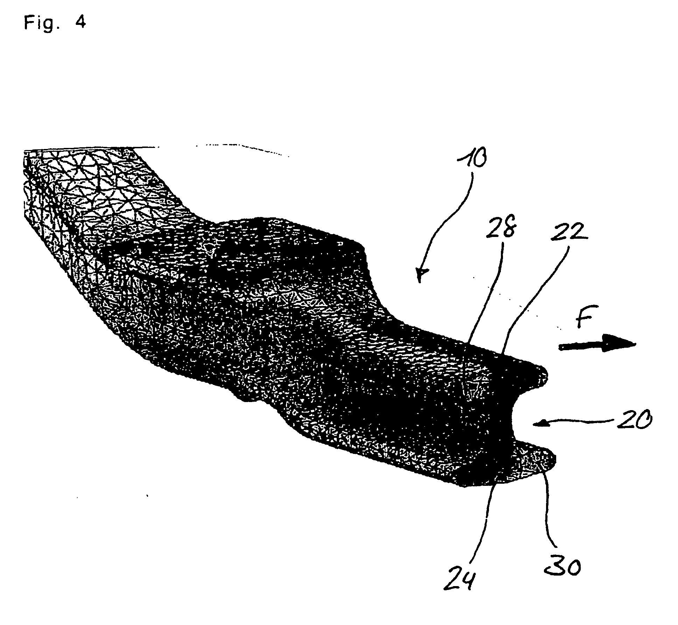

Da gemäß des FE-Berechnungsbildes der Fig. 4, das eine Berechnung der auftreten-den Materialspannungen im Profil des Achskörpers 10 mit Hilfe der sog. Methode der finiten Elemente verdeutlicht, die Bereiche des Profils 20 des Achskörpers 10, die in Fahrtrichtung vorne unten und hinten oben liegen, einer erhöhten Belastung unterliegen, sind diese Bereiche entsprechend Fig. 2 bzw. entsprechend Fig. 3 stärker und voluminöser ausgeführt als die übrigen Bereiche. Die Fahrtrichtung des Nutzfahrzeuges ist in den Figuren 2, 3 und 4 jeweils durch einen Pfeil F angedeutet.

Die Bereiche mit den erhöhten Materialbelastungen, die beim Lastfall "Bremsen" errechnet wurden, sind in Fig. 4 heller ausgeführt als die übrigen Bereiche. Dies sind entsprechend Fig. 2 und Fig. 3 der nach hinten weisende Schenkel 28 des oberen Schenkelabschnittes 22 sowie der nach vorne weisende Schenkel 30 des unteren Schenkelabschnittes 24 des Profils 20.

Wie bereits oben erwähnt, kann der Achskörper 10 aus gezogenem und/oder geschmiedetem Stahl oder Leichtmetall oder auch aus einem Faserverbundmaterial (z.B. GFK oder CFK o. dgl.) gefertigt sein. Der Achskörper 10 kann wahlweise auch ein Hohlrohrprofil (nicht dargestellt) aufweisen, das auf die beschriebene Weise durch asymmetrische Gestaltung an die auftretenden Maximalbelastungen angepasst ist.

Die erwähnten Materialverstärkungen können wahlweise über die gesamte profilierte Länge des Achskörpers 10 verlaufen oder auch nur abschnittsweise vorgesehen sein.

Die Gestaltung hängt in erster Linie von den berechneten Materialbelastungen ab, so dass unter allen auftretenden Bedingungen ein optimiertes Bauteil zur Verfügung gestellt werden kann, das bei gleicher Belastbarkeit über ein geringeres Bauteilgewicht verfügt oder das wahlweise bei gleichem Gewicht höhere Lasten aufnehmen kann.

## Patentansprüche

1. Achskörper (10) einer Nutzfahrzeugachse, insbesondere einer nicht angetriebenen Achse eines Nutzfahrzeugs, der im Querschnitt ein Doppel-T-Profil (20) aufweist, und an dessen Enden jeweils Räder vorgesehen sind, **dadurch gekennzeichnet, dass** der Achskörper (10) ein zumindest abschnittsweise asymmetrisches Profil mit verstärkten Zonen in Bereichen, die stärkeren Betriebsbelastungen bzw. fahrsituationsabhängigen Belastungsspitzen unterliegen als andere Bereiche, hat, wobei der Achskörper (10) zumindest abschnittsweise voluminösere und/oder verstärkte Bereiche des Profils - entsprechend den im Fahrbetrieb auftretenden Belastungen - aufweist, und wobei entweder in Fahrtrichtung (F) des Nutzfahrzeugs nach vorne weisende, zumindest abschnittsweise vergrößerte und/oder verstärkte untere Bereiche des Profils, oder in Fahrtrichtung (F) des Nutzfahrzeugs nach hinten weisende, zumindest abschnittsweise vergrößerte und/oder verstärkte obere Bereiche des Profils vorgesehen sind.

2. Achskörper nach Anspruch 1, **gekennzeichnet durch** zumindest abschnittsweise voluminösere und/oder verstärkte Schenkelabschnitte (22, 24) des Doppel-T-Profils (20) entsprechend den im Fahrbetrieb auftretenden Belastungen.

3. Achskörper nach Anspruch 1, **gekennzeichnet durch** einen in Fahrtrichtung (F) des Nutzfahrzeugs nach vorne weisenden, zumindest abschnittsweise vergrößerten und/oder verstärkten unteren Schenkel (28) des flach liegend angeordneten Doppel-T-Profils (20).

4. Achskörper nach einem der Ansprüche 1 oder 2, **gekennzeichnet durch** einen in Fahrtrichtung (F) des Nutzfahrzeugs nach hinten weisenden, zumindest abschnittsweise vergrößerten und/oder verstärkten oberen Schenkel (30) des flach liegend angeordneten Doppel-T-Profils (20).

5. Achskörper nach einem der voranstehenden Ansprüche, **gekennzeichnet durch** ein über seine gesamte Länge durchgängig asymmetrisches Profil.

6. Achskörper nach einem der Ansprüche 1 bis 5, **gekennzeichnet durch** ein zumindest außerhalb der Aufhängungsverbindungen (18) zum Fahrgestellrahmen des Nutzfahrzeugs liegendes asymmetrisches Profil.

## Claims

1. Axle casing (10) of a commercial vehicle axle, in particular a non-driven axle of a commercial vehicle, that has a double-T section (20) in the cross-section, and at each end of which two wheels are provided, **characterised in that** the axle casing (10) has an at least a sectionally asymmetrical section with reinforced zones in areas that are subject to greater operating loads or driving-situation-dependent peak loads than other areas, where the axle casing (10) has at least sectionally more bulky and/or reinforced areas of the section - in accordance with the loads that arise when driving - and where either at least sectionally enlarged and/or reinforced lower areas of the section that face forwards in the direction of travel (F) of the commercial vehicle or at least sectionally enlarged and/or reinforced upper areas of the section that face backwards in the direction of travel (F) of the vehicle are provided.

2. Axle casing according to claim 1, **characterised by** at least sectionally more bulky and/or reinforced knuckle sections (22, 24) of the double-T section (20) in accordance with the loads that arise when driving.

3. Axle casing according to claim 1, **characterised by** an at least sectionally enlarged and/or reinforced lower knuckle (28) of the flat-arranged double-T section (20), which knuckle faces forwards in the direction of travel (F) of the commercial vehicle.

4. Axle casing according to one of claims 1 or 2, **characterised by** an at least sectionally enlarged and/or reinforced upper knuckle (30) of the flat-arranged double-T section (20), which knuckle faces backwards in the direction of travel (F) of the commercial vehicle.

5. Axle casing according to one of the preceding claims, **characterised by** a continuously asymmetrical section across its entire length.

6. Axle casing according to one of claims 1 to 5, **characterised by** an asymmetrical section at least situated outside the suspension connections (18) with the chassis frame.

## Revendications

1. Corps d'essieu (10) d'un essieu de véhicule industriel, en particulier d'un essieu non moteur d'un véhicule industriel, qui présente un profilé en double T (20) dans sa section transversale et aux extrémités duquel sont prévues à chaque fois des roues, **caractérisé en ce que** le corps d'essieu (10) possède un profilé asymétrique au moins par section avec des zones renforcées dans les endroits soumis à de plus fortes contraintes de service ou à des pointes de contrainte plus fortes liées à la situation de marche que d'autres endroits, auquel cas le corps d'essieu (10) présente des endroits du profilé plus volumineux et/ou renforcés au moins par section - en fonction des contraintes survenant en marche -, et auquel cas sont prévus soit des endroits inférieurs de profilé orientés vers l'avant dans le sens de marche (F) du véhicule industriel, épaissis au moins par section et/ou renforcés, soit des endroits supérieurs du profilé orientés vers l'arrière dans le sens de marche (F) du véhicule industriel, épaissis au moins par section et/ou renforcés.

2. Corps d'essieu selon la revendication 1, **caractérisé par** des parties de fusée (22, 24) plus volumineuses au moins par section et/ou renforcées du profilé en double T (20) en fonction des contraintes survenant en marche.

3. Corps d'essieu selon la revendication 1, **caractérisé par** une fusée inférieure (28) du profilé en double T (20) disposé à plat de manière horizontale, orientée vers l'avant dans le sens de marche (F) du véhicule industriel et épaissie au moins par section et/ou renforcée.

4. Corps d'essieu selon l'une des revendications 1 ou 2, **caractérisé par** une fusée supérieure (30) du profilé en double T (20) disposé à plat de manière horizontale, orientée vers l'arrière dans le sens de marche (F) du véhicule industriel et épaissie au moins par section et/ou renforcée.

5. Corps d'essieu selon l'une des revendications mentionnées précédemment, **caractérisé par** un profilé asymétrique sur toute sa longueur.

6. Corps d'essieu selon l'une des revendications 1 à 5, **caractérisé par** un profilé asymétrique se trouvant au moins en dehors des liaisons de suspension (18) vers le cadre de châssis du véhicule industriel.
